# DEMANDE DE BREVET EUROPEEN

(11) **EP 0 670 290 A1**
(43) Date de publication de la demande: **06.09.1995**
(21) Numéro de dépôt: 95400461.0
(22) Date de dépôt: 03.03.1995
(51) Int. Cl.: C03C 17/02, C03C 8/16

(54) **Procédé de revêtement d'une surface de verre par une couche de type émail et encre d'impression à cuire pour la mise en oeuvre du procédé**

(30) Priorité: 05.03.1994 DE 4407366
(71) Demandeur: SAINT-GOBAIN VITRAGE INTERNATIONAL, F-92400 Courbevoie (FR)
(72) Inventeur: Goerenz, Walter, D-52477 Alsdorf (DE); Kalleder, Axel, D-66125 Saarbrücken (DE); Menning, Martin, D-66287 Quierschied (DE); Schäfer, Wolfgang, D-52074 Aachen (DE); Schmidt, Helmut, D-66130 Saarbrücken (DE)
(74) Mandataire: Muller, René

(57) **Abrégé**

Des encres de sérigraphie de type émail, utilisées pour le revêtement du verre, constituent l'objet de la présente invention. Des suspensions aqueuses d'oxydes métalliques ayant une granulométrie de l'ordre du nanomètre et utilisés dans la fabrication du verre, servent de liant à ces encres de sérigraphie. La suspension aqueuse permet d'une part de régler la viscosité et les caractéristiques d'écoulement de l'encre d'impression. D'autre part, le gel qui se constitue par polycondensation au cours de l'opération de séchage agit comme liant pour la couche imprimée. Enfin, la phase vitreuse de l'émail se forme à partir du gel au cours de la cuisson. Lors de cette cuisson, aucun produit de décomposition perturbateur ne se forme car l'encre d'impression ne contient aucun constituant organique ou n'en renferme qu'en de très faibles proportions.

## Description

La présente invention concerne un procédé de revêtement d'une surface de verre, notamment d'une surface d'un vitrage, par une couche de type émail. La mise en oeuvre du procédé s'effectue de la manière suivante : une encre d'impression à cuire contenant un liant, au moins un composant à bas point de fusion apte à se vitrifier et un ou des constituants à température de fusion élevée, comme des pigments colorés, est déposée à la surface du verre selon un procédé d'impression et le verre ainsi revêtu est chauffé à une température de 500-700°C après séchage de l'encre d'impression.

Les encres à cuire de type émail sont souvent appliquées à des fins de décoration ou pour des raisons techniques sur des objets en verre, par exemple des vitrages, et cuites à haute température. Cette technique est par exemple utilisée à grande échelle pour les pare-brise de voiture lorsque ceux-ci sont montés par collage dans les encadrements aménagés dans la carrosserie. Dans ce cas, une couche formant cadre, constituée d'une encre à cuire non transparente à la lumière visible et aux rayons UV, est habituellement imprimée sur les vitrages au moyen du procédé de sérigraphie. La couche ainsi imprimée est, après séchage, durcie à la chaleur, le cas échéant pendant les opérations de bombage et/ou de trempe. La couche d'émail durcie par cuisson a pour but d'empêcher la vision, à partir de l'extérieur, de la zone collée et de protéger la colle des rayons UV, lesquels entraînent à la longue la fragilisation de celle-ci.

Les encres à cuire connues pour cette utilisation contiennent en général un pourcentage relativement élevé de fritte de verre à bas point de fusion, des pigments par exemple sous forme d'oxydes métalliques et une partie organique, appelée huile de sérigraphie. Cette huile renferme par exemple un dérivé de la cellulose dans du glycol-éther, une résine acrylique dans du xylol et/ou un ou plusieurs terpènes. Cette huile, dite huile de sérigraphie, sert à la régulation de la viscosité et des caractéristiques d'écoulement requises de l'encre pour l'impression. De plus, les liants organiques entrant dans la composition de cette huile ont pour rôle de conférer à l'encre une résistance mécanique après séchage et jusqu'à la cuisson de manière à pouvoir traiter le substrat revêtu sans endommager la couche sérigraphiée.

Les constituants organiques de l'huile de sérigraphie sont en partie éliminés au cours de l'opération de séchage consécutive à l'impression, lorsque leur point d'ébullition est bas. Les fractions encore présentes dans l'huile après le séchage sont enfin brûlées lors de la cuisson de l'émail. Les constituants organiques se consument en donnant d'une part des produits de combustion gazeux, qui s'échappent de la couche d'émail en fusion, et d'autre part des résidus solides, qui s'incorporent dans cette dernière. Pour certaines applications, les résidus solides restés dans la couche peuvent avoir un effet perturbateur. De plus , les constituants volatiles peuvent être à l'origine de nuisances pour l'environnement, de sorte que les gaz qui se forment doivent être aspirés et leur toxicité neutralisée.

Un inconvénient supplémentaire des encres à cuire connues réside dans le fait que celles-ci doivent rester au contact de l'atmosphère environnante, et ne doivent pas être couvertes, sans possibilité d'échappement du gaz produit lors de la cuisson. Cela signifie qu'il n'est généralement pas possible d'appliquer ce type d'encre sur l'une des faces d'une feuille de verre devant être mise au contact d'une autre feuille de verre avant bombage simultané des deux feuilles de verre, dans la disposition citée, et la cuisson de la couche d'émail. Les vitrages feuilletés, en particulier les pare-brise des véhicules sont cependant fabriquées de la manière suivante : les deux feuilles de verre destinées à la fabrication d'un vitrage feuilleté sont assemblées pour former une paire et sont bombées sous cette forme. Lorsque l'on veut munir ces vitrages feuilletés d'une couche d'émail, il faut, soit imprimer celle-ci sur une face externe de la paire de feuilles de verre, soit utiliser un procédé à plusieurs étapes en disposant la couche d'émail sur une face d'une feuille de verre, puis en effectuant une cuisson préalable de l'encre d'impression avant assemblage des deux feuilles de verre et bombage de l'ensemble, la cuisson finale intervenant pendant le bombage.

Une encre à cuire connue du DE 38 43 626 A1 et utilisée pour les besoins ci-dessus mentionnés contient uniquement des constituants inorganiques et se compose en poids de 50 % de pigments céramiques, de 30 % de silicate de potassium et de 20 % d'eau. Après la cuisson, l'émail se compose uniquement de silicate de potassium et des pigments emmagasinés par ce composé. Comme on le sait, le silicate de potassium est soluble dans l'eau. Ce type d'encre à cuire peut donc trouver son application pour les couches d'émail sur la face d'une feuille de verre se trouvant à l'intérieur d'un vitrage feuilleté, mais elle ne peut être utilisée pour les couches d'émail qui sont en contact avec l'atmosphère, car elles sont attaquées par l'humidité de l'air.

Dans le DE 37 24 014 A1, un procédé du même genre a également été décrit. Dans ce procédé connu, une encre à cuire renfermant un liant inorganique à base de phosphates est utilisée. Pour les couches d'émail contenant du phosphate de ce type, le même principe s'applique concernant leur attaque par l'eau : par conséquent, elles ne sont utilisées que lorsque la couche durcie à la chaleur est protégée de la pénétration de l'humidité de l'air, par exemple, pour un vitrage feuilleté, lorsque la couche se trouve sur une des faces se trouvant à l'intérieur du vitrage.

Une autre encre à cuire, pouvant être utilisée en sérigraphie, est également connue du DE 41 32 652 A1 et se caractérise par la présence d'un liant inorganique. Dans ce cas, ce dernier est un silicagel. Les liants à base d'acide silicique utilisés sont en particulier l'orthosilicate de tétraméthyle, l'orthosilicate de tétraéthyle, le tétra-n-propylsilicate, le glycolsilicate de tétraméthyle et d'autres liants modifiés à base d'acide silicique ou d'esters de cet acide, qui ne sont pas exempts de constituants organiques. En outre, ces encres à cuire connues renferment toujours, en plus du liant inorganique, une huile de sérigraphie organique, qui est vraisemblablement nécessaire afin de procurer dans ce cas à l'encre à cuire les caractéristiques d'impression exigées. En fonction des objectifs visés, il faut également, en cas d'utilisation de ces encres à cuire connues, faire précéder l'opération de cuisson proprement dite d'une opération de séchage à une température suffisante pour la volatilisation de l'huile de sérigraphie organique, c'est-à-dire une température d'environ 250°C. C'est seulement lorsque l'huile est entièrement évaporée à cette température que la feuille de verre imprimée peut être combinée à une autre feuille de verre pour la fabrication d'un vitrage feuilleté à couche d'émail « interne », et que la paire de feuilles de verre ainsi constituée peut être bombée, et l'encre durcie à haute température.

L'objet de l'invention est de créer un procédé du type mentionné plus haut dans lequel l'encre d'impression est d'une part exempte de constituants organiques perturbateurs, et dans lequel d'autre part les qualités d'impression requises de l'encre, à savoir sa viscosité et ses caractéristiques rhéologiques, sont essentiellement obtenues par le liant inorganique utilisé.

Le problème technique posé est résolu selon l'invention en ce que le liant inorganique utilisé est une suspension aqueuse ayant la consistance d'un gel à faible viscosité et contenant des oxydes métalliques de structure dont la granulométrie est de l'ordre du nanomètre, ces oxydes subissant la polycondensation sous l'effet de la température et s'unissant en fondant à la température de cuisson pour former un verre non hydrolysable.

La présente invention concerne également l'encre d'impression utilisée dans le procédé susmentionné, cette encre à cuire pour l'impression d'une surface de verre comprenant au moins un composant à bas point de fusion apte à se vitrifier, un ou des constituants à point de fusion élevé, comme des pigments, et un liant, le liant étant un liant inorganique consistant en une suspension aqueuse contenant des oxydes métalliques, telle que décrite dans la définition du procédé selon l'invention.

Dans le procédé selon l'invention, on utilise une encre comprenant comme liant une suspension de divers oxydes « de structure », c'est-à-dire entrant dans la constitution du verre (par exemple des oxydes d'au moins un élément suivant : Si, Pb, Bi, Zn, Ti, Zr, Al, B, Na, K, etc...), qui sont isolés dans la suspension ou y forment, par combinaison entre eux, des particules inorganiques, dont les dimensions sont de l'ordre du nanomètre. Ces particules inorganiques exercent entre elles une action réciproque du fait de leur surface spécifique extrêmement étendue et agissent ainsi sur la structure du milieu liquide, entraînant une régulation de la viscosité de l'encre d'impression. Les dimensions des particules d'oxydes en suspension se situent avantageusement dans la plage de 2 à 100 nm, et de manière préférentielle dans la plage de 5 à 50 nm. Des caractéristiques particulièrement favorables de l'encre d'impression sont obtenues lorsque les dimensions des particules en suspension se situent en grande partie entre 8 et 15 nm.

La présente invention prévoit ainsi d'appliquer un procédé du type procédé sol-gel, avec utilisation de systèmes à plusieurs composants appropriés, afin de remplacer par ce moyen les constituants organiques habituellement utilisés dans les systèmes à encre d'impression. Selon l'invention, les caractéristiques rhéologiques de la pâte ou encre d'impression sont ajustées essentiellement par la concentration et la granulométrie des oxydes en suspension, et les oxydes métalliques sont choisis de manière à permettre, lorsque la température de cuisson est atteinte, la formation d'une phase vitreuse, qui sert de liant à l'émail et résiste à l'humidité.

Un autre avantage de l'utilisation de ce type de suspensions aqueuses réside en ce qu'il se produit une prise en masse assez poussée de l'encre d'impression lors du séchage de la pâte après l'opération d'impression (ce séchage s'effectuant à moins de 200°C et généralement entre 80 et 100°C) et pour des températures relativement basses, c'est-à-dire déjà à partir de 100°C à 120°C, par polycondensation du gel et volatilisation de l'eau. Il en résulte que le traitement ultérieur des objets imprimés peut se poursuivre sans difficulté et sans adjonction d'autres liants organiques ou inorganiques. Un séchage à plus haute température ou même un traitement thermique particulier, dans le but, par exemple, d'effectuer une cuisson préalable à une opération de bombage, n'est pas nécessaire dans le cas du procédé selon l'invention. Les oxydes de structure se transforment sans résidus en phase vitreuse de l'émail servant de liant, car aucun constituant à point d'ébullition plus élevé n'est expulsé ou aucun composant organique solide n'est brûlé aux températures variant entre 500°C à 700°C, lors de la cuisson proprement dite de l'encre d'impression.

Le procédé selon l'invention peut être mis en oeuvre de manière particulièrement avantageuse au moyen de suspensions de systèmes à plusieurs composants, notamment à trois ou quatre composants, par exemple une suspension du système à quatre composants PbO-B₂O₃-SiO₂-ZnO. Un tel système est particulièrement bien adapté pour obtenir les caractéristiques d'impression et d'écoulement souhaitées avec les constituants inorganiques d'une pâte d'impression classique, c'est-à-dire avec une fritte de verre habituelle et avec un ou plusieurs pigments, par exemple le chromate de cuivre (CuCr₂O₄). Le cas échéant, les qualités d'impression peuvent être encore améliorées par l'adjonction d'une très faible quantité (de l'ordre notamment de moins de 0,5 % en poids et, de préférence, de moins de 0,2 % en poids) d'un liant organique, lorsque cela est nécessaire pour certaines raisons. Une autre amélioration des propriétés thixotropes peut, le cas échéant, être obtenue d'abord par séchage de la suspension et ensuite par redispersion du gel. De cette manière, il est possible de parvenir à un net accroissement de la viscosité qui tire vraisemblablement son origine de la viscosité propre supérieure du gel, par comparaison avec la suspension initiale, par suite de l'effet des forces de Van der Waals.

Il convient de remarquer que, comme indiqué au paragraphe précédent, l'encre ou pâte d'impression selon l'invention peut comprendre, comme composant à bas point de fusion apte à se vitrifier, toute fritte de verre à bas point de fusion connue de l'homme du métier telle qu'habituellement utilisée dans les pâtes d'impression classiques. Par « bas point de fusion » on entend, selon l'invention, un point de fusion inférieur à 600°C. La fritte de verre traditionnelle pouvant être utilisée comme composant à bas point de fusion se présente généralement sous forme d'une poudre vitrifiable à base d'oxydes, tels que des oxydes d'au moins un des éléments suivants : Si, Pb, Bi, Zn, Ti, Zr, Al, B, Na, K, etc...

Un avantage particulier de l'invention est cependant qu'on peut également utiliser, comme composant à bas point de fusion apte à se vitrifier, un xérogel obtenu par séchage contrôlé à partir de la suspension devant être utilisée comme liant dans l'encre selon l'invention ou à partir d'une suspension telle que définie selon l'invention mais contenant des oxydes métalliques de structure différents de ceux de la suspension devant être utilisée comme liant.

Des exemples de tels xérogels sont donnés ultérieurement. L'encre à cuire selon l'invention peut également comprendre, comme composant(s) à bas point de fusion aptes à se vitrifier, un mélange de fritte de verre et de xérogel. Il apparaît que l'utilisation du xérogel précédemment mentionné comme composant à bas point de fusion apte à se vitrifier dans l'encre selon l'invention est aussi satisfaisante que l'utilisation d'une fritte de verre classique et donne d'aussi bons résultats.

De préférence, au moins un et avantageusement tous les oxydes de structure de la suspension formant gel et, éventuellement, du xérogel sont identiques aux oxydes ou à une partie des oxydes présents dans la fritte de verre utilisée dans le cas où l'encre d'impression comprend cette dernière.

Le procédé selon l'invention convient très avantageusement aux besoins de la sérigraphie et pour l'impression des vitrages par cette dernière technique. Comme, après séchage, aucun gaz ou en tout cas des quantités extrêmement faibles de gaz ou de produits de combustion sont libérés au cours de l'opération de cuisson, le procédé se prête aussi de manière particulière à la fabrication de vitrages feuilletés bombés, avec une couche décorative imprimée par sérigraphie sur l'une des faces se trouvant à l'intérieur du vitrage feuilleté.

En cas d'utilisation des suspensions selon l'invention, l'encre d'impression peut avoir une proportion de pigments largement supérieure à celle des encres connues, par exemple jusqu'à 60 % en poids rapporté au poids sec. Cela a notamment pour conséquence qu'au cours de l'opération de bombage simultanée d'une paire de feuilles de verre dont l'une est imprimée sur la face destinée à être au contact avec l'autre feuille de verre pendant le bombage, le danger de collage des deux feuilles par la phase vitreuse fondue de l'encre lors de la cuisson est considérablement diminué. De plus, les couches d'émail comprenant une proportion plus élevée de pigments sont optiquement plus denses, de sorte qu'une bonne opacité aux UV peut déjà être atteinte pour une faible épaisseur de couche. La diminution de l'épaisseur de la couche déposée présente à ce sujet un intérêt considérable, les effets négatifs sur les propriétés de résistance du verre augmentant en effet avec l'épaisseur de la couche. Les pigments utilisés peuvent être choisis parmi les pigments connus de l'homme de l'art et notamment parmi les oxydes de chrome, de cuivre, de fer, de cobalt, de nickel, les chromates de cuivre, de cobalt, etc...

Afin d'améliorer encore les propriétés anti-adhésives de l'encre d'impression lors de l'impression d'une face « interne » d'une paire de feuilles de verre devant être bombées simultanément, il peut, le cas échéant, être judicieux de mélanger à l'encre d'autres constituants à point de fusion élevé qui favorisent lesdites propriétés. On peut parvenir à ce résultat par l'ajout d'un ou de plusieurs matériaux céramiques dont le point de fusion est élevé, comme les frittes cristallisantes, la poudre de zinc, la poudre de fer, la poudre d'oxyde de zinc et/ou la poudre d'oxyde de fer.

Le procédé selon l'invention se prête non seulement à l'impression des vitrages munis de couches de décoration opaques, mais peut bien entendu être utilisé pour bien d'autres applications. Par exemple, les pâtes dites conductrices peuvent être modifiées selon l'invention (c'est-à-dire en remplaçant les constituants organiques par le liant inorganique décrit dans l'invention), par exemple celles à base d'argent, ces pâtes ou encres étant utilisées pour l'impression des bandes conductrices sur les feuilles de verre servant à la fabrication de pare-brise chauffants électriques ou pour l'impression de conducteurs d'antennes. Bien entendu, il est également possible d'exploiter le procédé pour l'impression d'autres objets en verre avec des encres décoratives, en particulier au moyen de la sérigraphie, pour laquelle les avantages décrits s'expriment de la même manière. Il est évident que le procédé ne se limite pas non plus à une certaine technique d'impression, mais qu'il peut être mis en oeuvre avec la même réussite avec d'autres procédés d'impression comme l'impression flexographique, l'impression au pochoir, le revêtement par pulvérisation ou d'autres procédés de revêtement.

Comme il a déjà été mentionné, les oxydes entrant dans la composition du verre utilisés pour les suspensions sont, de préférence, les oxydes de plomb, de bore, de silicium et de zinc. Cependant, en dehors de cette catégorie, les oxydes des éléments : bismuth, titane, zirconium, aluminium, sodium, potassium, etc... peuvent aussi être mis à profit. Des combinaisons appropriées du système PbO-B₂O₃-SiO₂-ZnO sont constituées des pourcentages en poids de 60-90 % de PbO, de 5-20 % de B₂O₃, de 2-15 % de SiO₂ et de 1-5 % de ZnO, rapportés au poids sec du système. Une combinaison qui s'est avérée particulièrement bonne est composée des pourcentages suivants : 83 % de PbO, 13 % de B₂O₃, 2,4 % de SiO₂ et de 1,6 % de ZnO.

Les suspensions requises et xérogels peuvent être fabriqués selon des procédés bien connus, tels qu'ils ont été décrits par exemple dans le document DE 42 17 432 A1. Les produits de base servant à leur fabrication sont des sels de métaux lourds solubles, comme par exemple le nitrate de plomb, I'acétate de plomb ou le nitrate de zinc, le dihydro-acétate de zinc, ou des composés organométalliques correspondants, comme les alcoolates de plomb, les alcoolates de zinc ou des organométalliques de bismuth, ainsi que des composés hydrolysables des éléments Si, Pb, Bi, Zn, Zr, Ti, B, Al, Na et K (par exemple les alkoxydes) ou les sels solubles de ces éléments.

Les produits de base susmentionnés seront dissous dans l'eau. Les réactions d'hydrolyse et de condensation qui s'ensuivent peuvent être contrôlées par des catalyseurs appropriés. Les catalyseurs pouvant être envisagés à cet effet sont les acides ou bases inorganiques ou organiques qui ne forment avec les substances de base choisies aucun sel difficilement soluble.

Des exemples de réalisation seront décrits ci-après pour la fabrication de pâtes de sérigraphie adaptées à l'application d'une bordure décorative noire sur un pare-brise de voiture.

### EXEMPLE 1

On fabrique une pâte pour sérigraphie à partir d'une poudre de fritte de verre, d'une poudre de pigment et un liant ayant la consistance d'un gel.

La poudre de fritte de verre est une poudre de fritte de verre à base de 78,8 % de PbO, 10,0 % de SiO₂, 10,0 % de B₂O₃ et 1,2 % de ZnO. En tant que poudre de pigment coloré, on utilise du chromate de cuivre CuCr₂O₄. En tant que liant fluide, on utilise la composition d'oxydes avec les pourcentages évoqués ci-dessus pour la fritte de verre. Ce liant (gel) est fabriqué de la manière suivante.

Dans un ballon à deux cols, avec condenseur à reflux et entonnoir séparateur, on dissout 12,31 g de nitrate de plomb (II) et de 431,3 mg de dihydro-acétate de zinc dans 61,55 ml d'eau. On ajoute 1,23 ml d'acide nitrique à 0,1 M et ensuite 0,88 ml de tétraéthoxysilane.

Après chauffage à 60°C, on ajoute goutte à goutte 4,24 ml de triméthylborate dans 2,5 ml d'éthanol et on agite pendant 6 heures à la même température.

On obtient un gel de faible viscosité, légèrement trouble.

On mélange 21,5 g de poudre de la fritte de verre précédemment mentionnée à 10,4 g de poudre de pigment coloré (CuCr₂O₄), on les moud ensemble à l'état humide et enfin on les sèche. On ajoute à ce mélange poudreux 22,8 g du gel à 4 composants précédemment préparé. Après un mélange scrupuleux et une homogénéisation de celui-ci, on obtient la pâte de sérigraphie prête pour l'impression.

### EXEMPLE 2

Au lieu d'employer une fritte de verre pulvérisée, on prend une poudre de xérogel, c'est-à-dire la poudre d'un gel séché. Comme gel pour la fabrication du xérogel, on fabrique un gel de la composition décrite dans l'exemple 1. Pour fabriquer le xérogel, on chauffe le gel à 4 composants en question à partir de la température ambiante en 80 min jusqu'à 400°C et on le maintient 30 min à cette température. La température est augmentée de 1°K/min jusqu'à 475°C et elle est maintenue constante pendant 2 heures. Ainsi, on obtient une poudre de xérogel colorée en brun-jaune.

On mélange 8,0 g de poudre de xérogel à 3,7 g de poudre de pigment coloré (CuCr₂O₄) et on les moud. Finalement, ce mélange est séché pendant 12 heures à 120°C dans une armoire séchante. Pour fabriquer la pâte de sérigraphie prête à l'emploi, le mélange séché est mélangé à 9,2 g du gel à 4 composants décrit dans l'exemple 1.

### EXEMPLE 3

On utilise comme composants (verriers) une poudre de fritte de verre ayant la composition suivante : 58 % PbO, 29 % SiO₂, 6,5 % B₂O₃, 2,0 % ZnO, 4,5 % Na₂O et on se sert à nouveau de chromate de cuivre comme poudre de pigment coloré.

Comme liant fluide, on utilise un gel du système à 3 composants : 83 % PbO, 10,4 % SiO₂, 6,6 % B₂O₃. Ce gel à 3 composants est fabriqué à partir de 12,31 g de nitrate de plomb (II) dissous dans 50 g d'eau. On ajoute à la solution 1,26 mg d'acide nitrique à 0,1 M et enfin 3,61 g de tétraéthyloxysilane. Après chauffage à 60°C, on ajoute 1,97 g de triméthylborate dans 1,5 ml d'éthanol goutte à goutte et on agite la solution pendant 6 heures à la même température. On obtient le gel à 3 composants précité, lequel est légèrement trouble et faiblement visqueux.

Pour fabriquer une pâte de sérigraphie, on procède ainsi : on mélange 21,5 g de la poudre de fritte de verre précédemment mentionnée et 22,5 g de poudre de pigment (CuCr₂O₄) et on opère un malaxage dans un broyeur à galets à l'état humide. Le mélange moulu est finalement séché.

Pour fabriquer la pâte de sérigraphie prête à l'emploi, on mélange 44 g du mélange pulvérulent séché à 31,4 g du gel à 3 composants et on homogénéise le mélange.

### EXEMPLE 4

On utilise comme composants de verre une poudre de xérogel d'un gel à 3 composants ayant la composition suivante : 89,6 % PbO, 5,2 % SiO₂, 5,2 % B₂O₃. A cette fin, on fabrique le gel correspondant de cette manière : dissolution de 12,31 g de nitrate de plomb (II) dans 50 g d'eau. On ajoute à la solution 0,74 ml d'acide nitrique à 0,1 M et enfin 1,67 g de tétraéthyloxysilane. Après chauffage à 60°C, on ajoute 1,44 g de triméthylborate dans 1,0 ml d'éthanol, goutte à goutte, et on agite la solution pendant 6 heures à la même température. On obtient un gel faiblement visqueux et légèrement trouble.

On fabrique la poudre de xérogel à partir de ce gel faiblement visqueux. Pour cela, le gel est chauffé en 80 min jusqu'à 400°C et maintenu 30 min à cette température. Celle-ci est augmentée ensuite à une vitesse de réchauffage de 1°K/min à 475°C et maintenue constante dans un intervalle de temps de 2 heures. On obtient ainsi une poudre de couleur brun-jaune.

21,5 g de cette poudre de xérogel sont mélangés à 11,3 g de poudre de pigment coloré (CuCr₂O₄) et moulus à l'état humide dans un broyeur à galets. Ce mélange est séché ensuite 12 heures à 120°C dans une armoire séchante.

32,8 g de ce mélange pulvérulent sont mélangés à 23,2 g du gel à 3 composants. Après mélange et homogénéisation, on obtient la pâte de sérigraphie prête à l'emploi.

### EXEMPLE 5

On fabrique une pâte de sérigraphie d'après l'un des exemples 1 à 4.

39,4 g de cette pâte ainsi fabriquée sont ajoutés à 73 mg de méthylhydroxypropylcellulose (MMPC 20.000), 7,3 mg de polyéthylèneglycol (PEG 6.00) et 2,5 µl du dérivé tensioactif L 77 (trisiloxane modifié) de la société OSI dans un mélange de 2 ml d'eau et 2 µl de butylglycol. Le mélange est finalement homogénéisé à l'aide d'un agitateur à boulets.

Grâce à ce très faible ajout en composants organiques, on peut améliorer les propriétés d'impression pour des applications déterminées, si cela devait s'avérer souhaitable. Les quantités de ces composants sont pourtant si faibles qu'elles ne peuvent plus avoir d'effets fâcheux aux températures de cuisson dans la mesure où, aux températures de séchage, elles ne se sont pas déjà volatilisées.

## Revendications

1. Procédé de dépôt d'une couche d'émail sur une surface en verre, en particulier sur la surface d'un vitrage, par application sur celle-ci, selon un procédé d'impression d'une encre pouvant subir la cuisson et contenant un liant inorganique, au moins un composant à bas point de fusion apte à se vitrifier et un ou des constituants à point de fusion élevé, et par chauffage de l'objet de verre imprimé, après séchage de l'encre d'impression, à une température de cuisson entre 500°C et 700°C, caractérisé en ce que le liant inorganique utilisé est une suspension aqueuse d'oxydes métalliques de structure dont la granulométrie est de l'ordre du nanomètre, qui subissent une polycondensation sous l'effet de la température et s'unissent en fondant à la température de cuisson pour former un verre non hydrolysable.

2. Procédé selon la revendication 1, caractérisé en ce qu'une suspension aqueuse est utilisée dans laquelle les oxydes métalliques forment des particules de 2 à 100 nm, et de manière préférentielle, de 5 à 50 nm.

3. Procédé selon la revendication 1 ou la revendication 2, caractérisé en ce qu'une suspension aqueuse des oxydes d'au moins un élément suivant : Si, Pb, Bi, Zn, Ti, Zr, Al, B, Na et/ou K est utilisée.

4. Procédé selon la revendication 3, caractérisé en ce qu'une suspension aqueuse des oxydes d'un système à plusieurs composants, de manière préférentielle le système à quatre composants PbO-B₂O₃-SiO₂-ZnO, est utilisée.

5. Procédé selon la revendication 4, caractérisé en ce que les oxydes métalliques du système à quatre composants se présentent dans les proportions suivantes en poids, rapportées au poids sec de l'ensemble du système : 60-90 % de PbO, 5-20 % de B₂O₃, 2-15 % de SiO₂ et 1-5 % de ZnO.

6. Procédé selon l'une des revendications 1 à 5, caractérisé en ce que l'encre comprend comme composant à bas point de fusion une fritte de verre habituelle pour la fabrication de l'encre d'impression.

7. Procédé selon l'une des revendications 1 à 6, caractérisé en ce que l'encre comprend comme composant à bas point de fusion une poudre de xérogel.

8. Procédé selon l'une des revendications 1 à 7, caractérisé en ce que la couche imprimée est séchée à la température de 80°C à 180°C et est durcie par cuisson à la température de 500°C à 700°C.

9. Procédé selon l'une des revendications 1 à 8, caractérisé en ce que l'encre d'impression est appliquée par le procédé de sérigraphie sur la surface du verre.

10. Procédé selon l'une des revendications 1 à 9, caractérisé en ce que la suspension aqueuse est fabriquée à partir de sels solubles, de composés organométalliques et/ou de composés hydrolysables selon une technique analogue au procédé sol-gel.

11. Pâte ou encre d'impression pour l'impression d'une surface de verre, comprenant au moins un composant à bas point de fusion apte à se vitrifier, un ou des constituants à point de fusion élevé et un liant inorganique, caractérisée en ce que le liant inorganique est une suspension aqueuse avec des oxydes métalliques de structure dont la granulométrie est de l'ordre du nanomètre.

12. Pâte ou encre d'impression selon la revendication 11, caractérisée en ce que la suspension aqueuse contient au moins un des oxydes des éléments suivants : Si, Pb, Bi, Zn, Ti, Zr, Al, B, Na et/ou K.

13. Pâte ou encre d'impression selon une des revendications 11 ou 12, caractérisée en ce que la suspension aqueuse contient un système à plusieurs composants, de préférence le système à quatre composants PbO-B₂O₃-SiO₂-ZnO.

14. Pâte ou encre d'impression selon une des revendications 11 à 13, caractérisée en ce qu'elle renferme un xérogel comme composant à bas point de fusion.

15. Pâte ou encre d'impression selon une des revendications 11 à 14, caractérisée en ce qu'elle comprend une fritte de verre habituelle et des pigments.

16. Pâte ou encre d'impression selon une des revendications 11 à 15, caractérisée en ce qu'elle contient un ajout très faible d'un matériau organique, dans une proportion en poids de l'ordre de grandeur de moins de 0,5 % et, de manière préférentielle, de moins de 0,2 %.
